# EUROPEAN PATENT APPLICATION

(11) **EP 1 895 783 A1**
(43) Date of publication of application: **05.03.2008**
(21) Application number: 06018131.0
(22) Date of filing: 30.08.2006
(51) Int. Cl.: H04Q 1/14

(54) **A modular assembly including a splitter module and a switch/control module as well as line, POTS and DSL contacts.**

(71) Applicant: 3M Innovative Properties Company, St. Paul, Minnesota 55133-3427 (US)
(72) Inventor: Bund, Christine, 42111 Wuppertal (DE); Mansholt, Michael, 50827 Köln (DE); Denter, Friedrich, 44575 Castrop-Rauxel (DE); Lindenbeck,. Bernd, 42283 Wuppertal (DE); Metral, Guy, 74 300 Cluses (FR); Perrier, Gaetan, 74410 Saint-Jorioz (FR); Frutos Fernandez, Enrique, 28023 Madrid (ES)
(74) Representative: Bergen, Katja

(57) **Abstract**

An assembly (10) in the field of telecommunications has:
at least one telecommunications module (12) having, at a front side (14) of the assembly, line, POTS and/or DSL contacts adapted to connect line, POTS and/or DSL wires, respectively, therewith,
at least one splitter module (16), and
at least one switch and/or control module (SCM) (18) which is removably attached to at least one telecommunications module (12) or at least one splitter module (16),
at least one SCM (18) being assigned to a single telecommunications (12) or splitter module (16) and/or
plural splitter modules (16) being assigned to a single telecommunications module (12).
A combination of such an assembly and an existing control system connected with at least one SCM is disclosed.

## Description

### Technical field

The invention relates to an assembly in the field of telecommunications, a combination having such an assembly and a use of a switch and/or control module in an assembly in the field of telecommunications.

### Background of the invention

In the field of telecommunications, numerous customers are connected with the switch of a telecommunications company via telecommunications lines. Customers are also sometimes referred to as subscribers. The switch is also often called an exchange or "PBX" (central office exchange operated by the telecommunications company). Between the subscriber and the switch, sections of telecommunications lines are connected with telecommunications modules. Telecommunications modules establish an electrical connection between a first wire attached to the telecommunications module at a first side and a second wire attached to the telecommunications module at a second side. The wires of one side can also be called incoming wires and the wires of the other side can be called outgoing wires. Plural telecommunications modules can be put together at a distribution point, such as a main distribution frame, an intermediate distribution frame, an outside cabinet or a distribution point located, for example, in an office building or on a particular floor of an office building. To allow flexibility in wiring, some telecommunications lines are connected with first telecommunications modules in a manner to constitute a permanent connection. Such a distribution point can be accommodated in a designated room or cabinet located either inside or outside a building, as well as in manholes, i.e. underground holes that can be adapted to allow an individual to climb into the hole and provided with a cover.

To allow versatility in wiring some telecommunications lines are connected with first telecommunications modules in a manner to constitute a permanent connection. Versatility is realized by so-called jumpers or cross connects, which connect contacts of the first telecommunications module with contacts of a second telecommunications module in a versatile manner. These jumpers can be changed when, for example, a person moves within an office building to provide a different telephone (i.e., a different telephone line) with a telephone number the relocated person intends to keep. In the telecommunications module, disconnection points can be located in the electrical connection between the two sides. At such disconnection points, disconnection plugs can be inserted to disconnect the line. Protection plugs or magazines may also be connected at a disconnection point to the module to protect equipment connected to the wires from overcurrent and overvoltage. Moreover, test plugs can be inserted at a disconnection point in order to test or monitor a line.

Recently, Asymmetric Digital Subscriber Line (or "ADSL") technology has spread widely in the field of telecommunications. This technology allows at least two different signals to be transmitted on a single line and is achieved by transmitting the different signals at different frequencies along the same line. Signals are combined at a particular point in the telecommunications line and split at another point. In particular, at the subscriber side separate voice and data signals are combined and sent to the central office over the same line. In the central office or remote location (or remote terminal) the combined signal is split. For the transmission of voice and data signals to the subscriber, separate voice and data signals are combined at the central office or remote terminal, sent to the subscriber and split at the subscriber side. After splitting the signal, the so-called "plain old telephone service" (or "POTS") or ISDN can be used to transmit voice signals. The remaining part of the split signal can be used to transmit data or other information. So-called splitters, which are used to split or combine the signal, can generally be arranged at any distribution point. In this context, a POTS wire or POTS jumper indicates a wire that is connected with an exchange of the telecommunications company. A line connection indicates a wire that leads to the subscriber or customer, and, as discussed in more detail below, a DSL-wire indicates a wire that is connected with a DSLAM or other DSL service equipment and thus can, for example, transmit data. A DSLAM (Digital Subscriber Line Access Multiplexer) processes the data signal.

Published international patent application number WO 03/079599 of the applicant describes a contact bank, a measurement arrangement and a telecommunications assembly, with which telecommunication lines can be tested. The contact bank can have tapping contacts and the tapping contacts and/or the contact bank can be connected with a test device via a connecting structure having at least one test bus.

The applicant's published European patent application EP 1 578 145 A1 describes an assembly of telecommunications modules having line, POTS and DSL contacts at a front side thereof, and being mountable to a carrier in a pivotable manner. Splitter plugs may be inserted into the modules at a rear side thereof.

### Summary of the invention

The present invention provides assemblies in the field of telecommunications having an extended functionality.

In another aspect, the invention provides a combination having an improved assembly in the field of telecommunications.

In yet another aspect, the invention provides a novel use of a switch and/or control module in an assembly in the field of telecommunications.

### Brief description of the drawings

The invention will be described hereinafter in part by reference to non-limiting examples thereof and with reference to the drawings, in which
FIG. 1 shows a schematic perspective view of an assembly according to a first embodiment of the invention;
FIG. 2 shows a schematic perspective view of an assembly according to a second embodiment of the invention;
FIG. 3 shows a perspective view of an assembly according to a third embodiment of the invention;
FIG. 4 shows a detailed perspective view of the assembly of FIG. 3; and
FIG. 5 shows a detailed and partially cut view of the assembly of FIG. 3.

### Detailed description of preferred embodiments

The assemblies described herein have at least one telecommunications module, at least one splitter module and at least one switch and/or control module. These modules are generally units that may be handled separately from other units, for example other modules, especially not only during the manufacture thereof, but also in a state, where they are installed in a distribution point in the field of telecommunications module and may even be in use. In other words, one or more splitter modules may be attached to the telecommunications module at a point in time, when the telecommunications module has already been used. The step of adding one or more splitter modules to the telecommunications module may be useful for providing DSL-service to further subscribers. Similarly, one or more switch and/or control modules (SCM in the following) may be added to the telecommunications module and/or the splitter module to allow switching and/or control operations, such as testing and/or monitoring of a telecommunications line to be performed. It is noted that one or more SCMs are usable with a telecommunications module alone, i.e. without any splitter modules, for example, when switching, testing and/or monitoring operations are to be performed only in the telecommunications module. Further, one or more SCMs and one or more splitter modules may be integrated into a single switch and/or control and splitter module. When such a module is assigned to plural telecommunications lines, it may be referred to as a switch/control/splitter magazine. As regards a bus as mentioned below, such a bus may be connectable with one or more SCMs and/or a combined module or magazine as described above.

One or more of the above-mentioned modules may have a housing that may comprise one or more housing parts and may, for example, be made of insulating material, such as plastic. As the modules may be attached and electrically connected with each other, the modules, especially the housings of the modules, may have mechanical connectors, such as latch hooks, brackets as well as recesses and/or openings adapted to cooperate with latch hooks, brackets or similar contours. As regards the electrical connection, the modules mentioned may have exposed contacts that may extend from the insulating housings or may be accessible through openings formed in the housings. For example, one or more contacts of a first module may project from the first module and may be insertable into an opening formed in a second module to connect the contacts of the first module with the contacts of the second module.

The assemblies described herein may be located in any type of distribution point, for example, a main distribution frame, an intermediate distribution frame, a remote cabinet or any other remotely located distribution point. Moreover, the telecommunications modules and the splitter modules may be located in different locations, i.e. physically separated, and may be connected, for example by jumpers. The splitter modules may be collected in one or more splitter shelves. The assemblies described herein also relate to such arrangements.

The telecommunications module of the assembly described herein generally has, at a front side of the assembly, line, POTS and/or DSL contacts adapted to connect line, POTS and/or DSL wires, respectively, therewith. One or more of these types of contact may be at a different side than a front side of the assembly. In this context, reference is made to the applicant's European patent application EP 05028633.5, filed December 29, 2005, the disclosure of which is incorporated herein by reference, particularly with regard to the arrangement of contacts on various sides of a telecommunications module.

The line, POTS and DSL wires, respectively, are adapted to transmit line, POTS and DSL signals, respectively, to the subscribers, the exchange and the DSL, respectively. The telecommunications module may include one or more terminal strips each having a housing. These terminal strips may be attached to each other by appropriate means, such as latch hooks, brackets, rails, adhesive or in any other suitable manner. As an alternative, the telecommunications module may have a single housing with line, POTS and/or DSL contacts being exposed at a front side of the housing. Thus, a telecommunications module, as defined herein, has the above-mentioned different types of contacts, so that the telecommunications module is prepared to provide xDSL service. In particular, the telecommunications module may be provided as described in the above-mentioned published European patent application EP 1 578 145 A1 of the applicant.

The splitter module of the assembly described herein generally includes any electronic or electric components to split a signal which combines a POTS signal on the one hand and a DSL signal on the other hand in different frequency bands. In a corresponding manner, a splitter circuit of the splitter module generally combines these signals, when they are to be transmitted as a combined signal. The splitter module may be attachable to the telecommunications module at a front or a rear side. When the splitter module is attachable to the rear side of the telecommunications module, it is easier to ensure that the front side of the telecommunications module, especially the contacts of the telecommunications module and/or the wires connected therewith are accessible, for example, for changing connections. When it is expected that the splitter modules have to be removed or changed frequently, it may advantageous to provide these at a front side of the telecommunications module. The splitter module may be a single-line splitter module adapted to combine and split the signal transmitted on a single telecommunications line. In an alternative embodiment, the splitter module may be a multi-line splitter module that can also be called a splitter magazine, including splitter circuits for splitting and combining the signals transmitted via plural telecommunications lines. These aspects, i.e. the module being a single-line module or, alternatively, a multi-line module that can be called a magazine, also apply to the SCM described hereinafter.

The SCM may be located at any side of the telecommunications module, particularly at the same side as the splitter modules. It may be advantageous that the SCM is located at a rear side of the telecommunications module, as it is expected that the SCM does not have to be changed frequently. The SCM may be connected with a bus which may serve as a control bus, for example for controlling one or more splitter modules, or as a test bus for testing and/or monitoring telecommunications lines connected with the telecommunications module.. In particular, the SCM may have one or more switches for connecting a test bus with the contacts of a particular splitter module or particular contacts of the telecommunications module to test or monitor a particular telecommunications line. The SCM may have a contact bank as described in the applicant's published international patent application WO 03/079599. The SCM may have one or more printed circuit boards for arranging electric and electronic components thereon, and the printed circuit boards may be electrically connected with each other. Any of the above-mentioned modules may have protection components, such as over-voltage and/or over-current protectors. Thus, the telecommunications module may have such components. Also the splitter module could have such protection components, particularly when the one or more switches or relays for bypassing the splitter are included in the splitter. Finally, when the SCM has these switches and/or relays, the SCM could have protection components, such as over-voltage and/or over-current protectors.

At least one SCM may be assigned to a single telecommunications or splitter module. This shows both the modularity and versatility of the assemblies described herein. It may be advantageous, in view of step-by-step investments, to add splitter modules and/or SCMs to telecommunications modules as the need arises. For example, the splitter modules may include single line splitters which provide the splitting of signals and enable xDSL services for a single telecommunications line. In a first embodiment, separate SCMs may be assigned to separate splitter modules. Thus, only when an additional or new splitter module is attached to the telecommunications module, an SCM is added. When at least one SCM is assigned to a single telecommunications module, SCMs can be added as the need arises and only to those telecommunications modules, which are to be combined with an SCM to form an assembly according to the invention. For example, the need for remote testing and monitoring of telecommunications lines might only arise step-by-step and/or with regard to specific telecommunications modules, so that it may be advantageous to add SCMs only to specific telecommunications modules. This keeps the costs low compared with plural telecommunications modules and/or splitter modules being combined with an SCM, which might be oversized if only a few telecommunications or splitter modules require the services provided by the SCM.

The above-described modularity and versatility also applies when plural splitter modules may be assigned to a single telecommunications module. Depending on the need for xDSL services, splitter modules may be added with regard to specific telecommunications lines and there is, due to the assemblies described herein, no need to invest in a telecommunications module completely equipped with splitter modules, when only a few subscribers ask for xDSL services. The above-described features may be combined with each other. Thus, in the assemblies described herein, a single SCM can be assigned to a single telecommunications module and plural splitter modules can be assigned to a single telecommunications module. It may be particularly advantageous to have more splitter modules than telecommunications modules and SCMs, as the SCM may provide a certain concentration to the effect that plural splitter modules and/or plural telecommunications lines can be addressed by a single SCM, when telecommunications lines are to be tested or monitored, or when the splitter modules are to be switched or activated.

The interface and electrical connection between the modules involved may be of any suitable type. For example, connectors having pins and complementary connectors having holes or slots for receiving the pins may be used. Moreover, one or more of the modules may have contacts formed as generally strip-like contact elements which are in contact with each other at a disconnection point accessible from outside. The electrical connection may be established by inserting a contact or a contact portion of another module, which may, for example, be formed at the edge of a printed circuit board, at the disconnection point. As a further alternative, one or more of the modules may have one or more printed circuit boards, of which an edge extends from the module and another module may have one or more card edge connectors. These may be formed as one or more connector sockets, as one or more fork-type contacts adapted to connect with the edge of a printed circuit board or in any other suitable manner.

It may be advantageous if at least two of the interface between the SCM and the telecommunications module, the interface between the plural splitter modules and the telecommunications module and the interface between the splitter modules and the SCM are at least partially identical with each other. The interfaces, to which reference is made, may include mechanical and/or electrical contours and/or components, for example contacts, which are mechanically or electrically, respectively, connectable with each other. When the mentioned interfaces are at least partially identical with each other, versatility is increased as the SCM is attachable and electrically connectable with the telecommunications module, also when no splitter modules are present.

As regards the splitter modules, it may be advantageous if at least one splitter module has at least one switch. In this embodiment, the switching operations, for example, to activate or bypass the splitter, may be performed in the splitter module. Moreover, in an embodiment, where the splitter modules are located at the rear side of the telecommunications module, and the SCM is located at the rear side of the splitter modules, the signal path for the signals related to the switching of the splitter modules may be kept relatively short, which may be advantageous in view of minimizing crosstalk. In this context, it is noted that a splitter module in one of the embodiments described above or below having at least one switch, for example, to activate or bypass the splitter, is a novel aspect which is to be considered subject matter of the present application separate from the assembly described herein. Whereas the splitter module having at least one switch may be used in an embodiment of such an assembly described above or below, the splitter module may also be provided separately and may be advantageous to activate the splitter module at an appropriate point in time. For example, when a particular customer asks for xDSL service, the splitter module may be activated without the need of changing numerous connections in a telecommunications distribution point, for example, jumpers including the need to change these in a remote cabinet. Rather, with a splitter module having a switch that is preferably controllable from a central location, the splitter may be activated without operating on the splitter module itself. Moreover, the splitter module may only have two switches to bypass a low pass filter and directly connect line with POTS with provides POTS service only. Finally, the described switching operations and involved switches may be used only to activate or deactivate the splitter, also without connecting the splitter module to a test device. It may be mentioned that the signal transmitted or processed by the splitter may, in the assemblies described herein, not be "taken out" of the splitter module to perform testing or monitoring. Rather, the switching of the splitter module may only be provided to activate or bypass the splitter.

In view of a reliable attachment of one or more module to another module, it may be advantageous to provide a mechanical centering contour at at least one interface between the telecommunications, the splitter and the switch and/or control module.

It may, furthermore, be advantageous in view of a compact assembly in a front-rear-direction, when the splitter modules and the SCM overlap in a front-rear-direction. In other words, as seen in a front-rear-direction, the splitter modules and the SCM are at least partially located adjacent, and not only stacked in a front-rear-direction, to efficiently make use of the available space.

It may also be advantageous to provide the SCM with at least one indicating element to provide an indication regarding the operating state, for example, an on-off-state of at least one of the splitter modules and the SCM.

The assembly described herein may further have at least one bus disconnectably connected with at least one SCM. This may be advantageous to allow remote control of the SCM to initiate switching, testing or monitoring operations, also when the assembly is remotely located. The bus may extend along plural assemblies as described herein. It is noted that any services, for example xDSL service, via the splitter modules and/or switching and control operations via the SCM may be maintained, also when the bus is removed from one or more SCMs.

Whereas the bus may be connected with the SCM in any suitable manner, it may be advantageous to provide the bus with at least one bus plug.

As the bus may have to be removed from the SCM, it may be advantageous to provide the bus, especially a bus plug, with at least one pulling element. The pulling element may be grasped to remove the bus from the SCM.

The assembly described herein may be mountable to a carrier in the field of telecommunications via a mechanical connector. In this embodiment, secure and well organized mounting of the assembly may be achieved.

As regards the mechanical connector, it may be advantageous to provide the mechanical connector with a plug securing element for securing the bus plug. Thus, the mechanical connector may efficiently be used to additionally secure the bus plug.

In a similar manner, it may be advantageous with regard to an efficient use of the mechanical connector, when the mechanical connector has a module securing element for securing the SCM. The module securing element may be particularly useful, when the bus plug is to be removed, whereas the SCM is to stay in place so that the bus plug may be removed by pulling the plug, and the module securing element applies the necessary counterforce to keep the SCM in place.

The mechanical connector generally has a mechanical connection portion to achieve the attachment of the assembly to the carrier. Additionally it may be advantageous if the mechanical connector has at least one centering portion separate from the mechanical connection portion, to locate the assembly relative to the carrier in a well defined manner. It may be advantageous to form the centering portion separate from the mechanical connection portion to allow a design of these portions that is specifically adapted to the function to be performed.

The assembly described herein may be combined with an existing control system that may be connected with at least one SCM. The existing control system may, for example, be a system provided for a different purpose, however now used as a bus system for providing connection with one or more SCMs.

As an alternative, the system called SESYS available from 3M Telecommunications may be installed. Moreover, the described combination provides the advantage that any existing control system may be used so that it does not require extra control wires or similar components to address the SCM. The control system may, for example, have a central control unit that may be located in a central location. The central control unit may be connected with one or more remote modules. In particular, one remote module may be assigned to one distribution point, such as a main or intermediate distribution frame or a remote cabinet. A bus may extend from the remote module, and a protocol extender may be present along the bus and between the remote module and one or more assemblies as described herein. It is noted that the described use of an existing control system as well as the use of SESYS within a distribution point, such as a main or intermediate distribution frame or one or more remote cabinets, for controlling switching operations in the distribution point, provides novelty independent from the assemblies described herein. Thus, such a use as well as a distribution point having SESYS as a control system, in one of the embodiments described above and below, is to be considered independent subject matter of the application.

In connection with the assembly described herein, it has also been found to represent a novel aspect that a switch and/or control module in an assembly in the field of telecommunications is used to independently switch more than one splitter module to bypass more than one splitter and to connect line with POTS. Conventionally, switching operations to connect a splitter module with a test device were performed. However, only a single splitter module was connectable with the test device at a particular point in time. The invention now suggests to use a SCM to independently switch more than one splitter module to bypass the splitter and to connect line with POTS. Thus, more than one splitter module may be bypassed to provide POTS only until a point in time, when the subscriber asks for xDSL service. At that time, the splitter may be switched to activate the splitter and provide xDSL service.

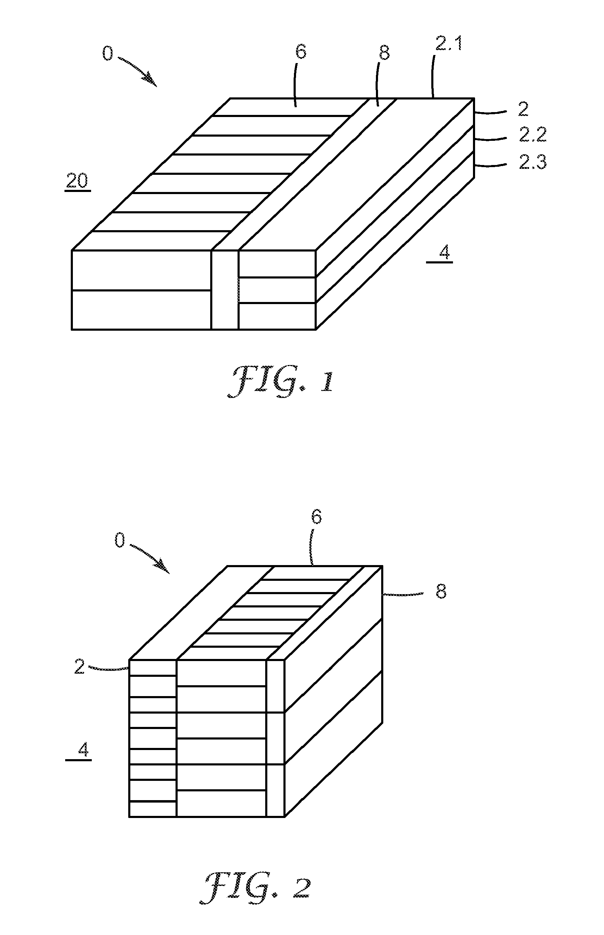

Turning now to FIG.1, which is a schematic perspective view of an assembly 10 having a telecommunications module 12, an SCM 18 and plural splitter modules 16. In the embodiment shown, the telecommunications module has three sections 12.1, 12.2, 12.3 that may correspond to terminal strips or the modules described in the applicant's above-mentioned European patent application EP 1 578 145 A1. Thus, each of the sections 12.1, 12.2, 12.3 may have parallel rows of contacts adapted to connect wires therewith. For example, the contacts of sections 12.1, 12.3 may be adapted to connect line and POTS wires therewith, whereas those contacts which may be adapted to connect DSL wires therewith, may be present in section 12.2. As will be apparent to those skilled in the art, splitter modules 16 may be appropriately connected with the telecommunications module 12 to split or combine the signal transmitted by the line contacts into the appropriate signals carried by the POTS and the DSL contacts, respectively. In the embodiment shown in FIG. 1, the front side of the assembly is denoted by 14, and the contacts (not shown) of the telecommunications module 12 are exposed at this front side. Further, in the embodiment shown, an SCM 18 is attached to the rear side 20 of the telecommunications module 12. Plural splitter modules 16 are attached to the rear side of the SCM 18.

In this embodiment, the assembly provides the advantage that the splitter modules 16 do not necessarily have to be adjusted so as to be attached to the SCM 18. Rather, the interface between the SCM 18 and the splitter modules 16 may be formed at least partially identical to the interface between the telecommunications module 12 and the splitter modules 16. Such an arrangement may, for example, be taken from the applicant's published European patent application EP 1 578 145 A1. Thus, due to the fact that an appropriate design may be chosen for the rear interface of the SCM 18, the splitter modules 16 do not have to be adapted to the SCM 18. The embodiment shown in FIG. 1 may further have the advantage that splitter modules 16 may be removed or attached with the SCM 18 staying in place. Also when no splitter modules 16 are present, the SCM 18 may perform certain functions, such as the testing and monitoring of telecommunications lines connected with the telecommunications module 12. Moreover, it is possible to provide different types of splitter modules in the assembly as shown in FIG. 1. Finally, in the embodiment of FIG. 1, as the SCM 18 is arranged between the telecommunications module 12 and the splitter modules 16, many functions, for example switching operations in the telecommunications 12 and/or modules 16, as well as testing in the telecommunications module 12 and/or splitter modules 16 may be realized with short signal paths as the SCM 18 has an interface both with the telecommunications module 12 and the splitter modules 16.

In the embodiment of FIG. 1, the SCM 18 may have one or more switches, for example one switch for each splitter module 16, to activate or deactivate the splitter. In other words, the SCM 18 may be adapted to route the signal through the splitter module 16 only in a case in which an appropriate switch is in an "activate"-position. In this respect, the embodiment of FIG. 1 may be advantageous in that the signal is not routed through the splitter when the splitter is deactivated. Thus, the signal path can be kept relatively short, which may be advantageous in view of minimizing crosstalk between adjacent lines. It is to be noted in this context that a splitter module assigned to a particular telecommunications line, may be deactivated to bypass a low pass filter of the splitter module and connect the line side with POTS to provide Plain Old Telephone Service without xDSL service. Providing the SCM 18 with the switches for activating and/or deactivating the splitter modules 18 may also be advantageous in that the interface between the splitter module 16 and the SCM 18 may be formed relatively simply. This is because the switching operation may then be performed in the SCM, and the splitter module 16 may only receive a signal that is to be split or not depending on the activated or deactivated state of the splitter module. When the switch is provided in the splitter module 16, the control information to change the position of the switch is to be transferred from the SCM 18 to the splitter module 16. This might require additional contacts. It is, however, also to be noted that in the embodiment of FIG. 1 not only the SCM 18 may have the switch for activating and/or deactivating a splitter module but that such a switch can also be included in the splitter module.

FIG. 2 shows a second embodiment of the assembly, in which the SCM 18 is not located between the telecommunications module 12 and the splitter modules 16 (see FIG. 1), but at the rear side of the splitter modules 16. The front side 14 is again defined as that side of the assembly 10, at which contacts (not shown) of the telecommunications module 12 are exposed to allow the connection of wires therewith. It should also be noted in connection with the embodiment of FIG. 2, that an assembly of three telecommunications modules 12, plural splitter modules 16 and three SCMs 18 is shown. In other words, the assembly of FIG. 1 is stacked three times with the SCMs 18 as mentioned, being at a different position than in the embodiment shown in FIG. 1. In the embodiment of FIG. 2, the SCM 18 and/or the splitter module 16 may have a switch for activating the splitter module. When the switch is provided in the splitter module, this may provide the advantage that the signals do not have to be routed to the SCM 18 located at the rear side of the assembly, but the signal path is kept relatively short, which may be advantageous with regard to minimizing crosstalk. In the embodiment of FIG. 2, it may be advantageous to have the possibility to remove the SCM without disturbing the splitter modules. In other words, xDSL service can be maintained while the SCM is removed, i.e. the switches keep their position.

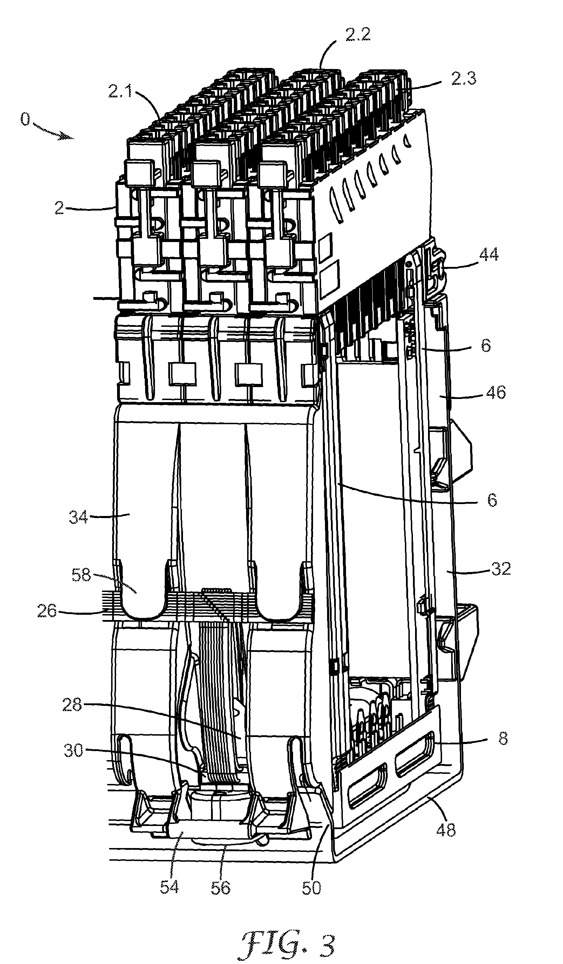

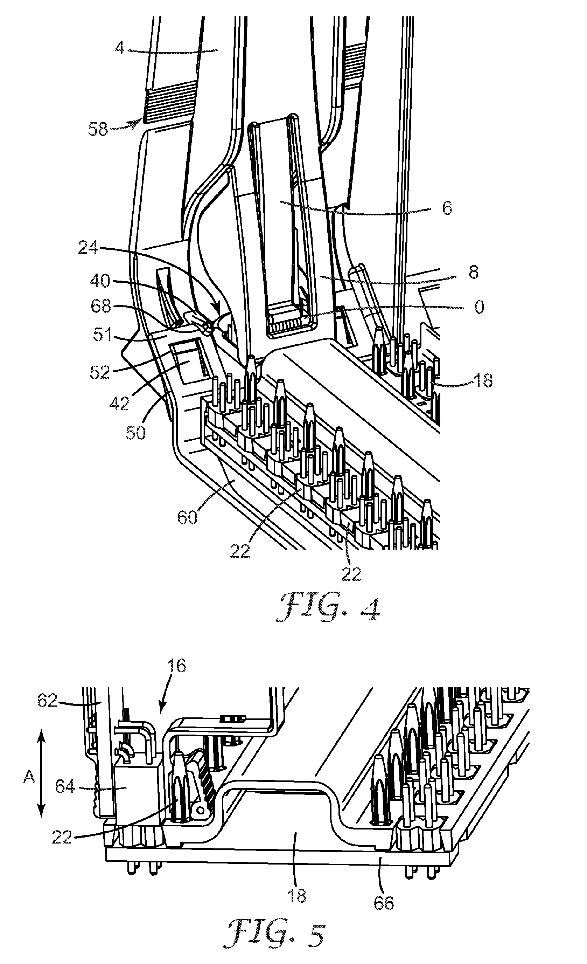

FIG. 3 shows a perspective view of a third embodiment based on the second embodiment, i.e. plural splitter modules (not shown in Fig. 3) being located between the telecommunications module 12 and the SCM 18. The assembly is, in the case shown, mounted to a carrier 32. In the case shown, the assembly is mounted to the carrier 32 in a swivable manner by hinge 44. The carrier 32 is, in a cross-section, essentially L-shape and may have, starting from the hinge 44, a first side wall 46 and a bottom wall 48. A second side wall 50, that is significantly shorter than first side wall 46, extends from the bottom 48 at a position opposite first side wall 46. The second side wall 50 has, in the embodiment shown, plural cutouts 52 (see Fig. 4) that cooperate with latch hooks 42 provided on a mechanical connector 34 extending from the second side wall 50 to the telecommunications module 12 to a level approximately corresponding to the position of the hinge 44. The latch hooks 42 can be released from the cutouts 52 by a handle 54, particularly by moving the handle 54 towards the viewer of FIG. 3 so as to disengage the latch hooks 42 from the cutouts 52. The handle 54 may connect the latch hooks 42 to simplify the operation of disengaging the latch hooks 42. When the latch hooks 42 are removed form the cutouts 52, the assembly can be swiveled or pivoted about hinge 44. This, for example, allows operations to be performed at the SCM 18 and/or the splitter module 16. The above-described structure, i.e. telecommunications module 12 consisting of three sections 12.1, 12.2, 12.3, plural splitter module 16 attached thereto, the swivable mounting to the generally L-shaped carrier 32 via hinge 44 and mechanical connector 34 is derivable from the applicant's published European patent application EP 1 578 145 A1, the disclosure of which is, with regard to the above-described structure, incorporated herein by reference. Moreover, the above-described structure including the hinge 44 may be designed as described in the applicant's European patent application EP 0 501 705 4.7, filed August 5, 2005. Also the disclosure of this document is incorporated herein by reference with regard to the general structure as described above.

The assembly as described herein and as shown in FIG. 3 additionally has an SCM 18 which is, in the embodiment shown, provided at the rear side of the assembly, i.e. near the bottom wall 48 of the carrier 32. As described in more detail below, the splitter modules 16 are electrically and preferably also mechanically connected with the SCM.

In the embodiment shown, a lug 40 (see Fig. 4) which serves as a mechanical centering portion is provided in the vicinity of each latch hook 42. Further, in the embodiment shown, the upper portion 51 of the second side wall 50 of the carrier 32 is adapted to be accommodated in a recess 68 provided on the lug 40. The interaction between the lugs 40 with the recesses 68 and the upper portion 51 of the second side wall 50 provide an appropriate positioning of the mechanical connector 34 relative to the second side wall 50. It may be advantageous to provide this mechanical centering function, as shown in the embodiment, separate from the mechanical locking function, i.e. the interaction between the latch hooks 42 and the cutout 52 in the second side wall 50 of the carrier 32.

In the embodiment shown, the SCM 18 has an extension 56 extending through a recess formed in the second side wall 50 of the carrier 32. The extension 56 may have an indicating element (not visible in FIG. 3) for indicating the operational mode of the SCM 18 and/or the splitter modules 16 or similar information.

In the embodiment shown, the extension 56 is provided with a socket adapted to receive a bus plug 30. The bus 26 may extend along plural assemblies 10 as shown in Fig. 3, i.e. generally in a direction from left to right as seen in FIG. 3. The bus 26 may have the function of a switch, control and test bus to cause appropriate switching operations in the SCM 18 to test or monitor a particular telecommunications line connected with the telecommunications module 12. Moreover, the function of one or more splitter modules 16 may be tested. The bus 26 may also deliver signals to the SCM 18 which initiate switching operations, for example to activate or deactivate one or more splitter modules 16. In the embodiment shown, the bus plug 30 has a pulling element 28 in the form of a tape. This pulling element may be formed in any other suitable manner and allows to pull the bus plug 30 from the socket in a generally upwards direction (as shown in FIG. 3) without grasping the bus 26 as such.

FIG. 4 shows a detail of the assembly of FIG. 3 in the surroundings of the bus plug 30. In the embodiment shown, a plug securing element 36 is provided on the mechanical connector 34 to hold the bus plug 30 in the socket of the SCM 18. When the bus plug 30 is to be removed, the plug securing element 36 has to be slightly moved towards the first side wall 46 of the carrier 32 (see Fig. 3), i.e. to the right side in FIG. 4, to allow the bus plug 30 to be removed. As the bus plug 30 is to be removed from the socket provided in the SCM 18, the SCM 18 needs to stay in place during the operation of removing the bus plug 30. This is accomplished in the embodiment shown by a module securing element 38. The SCM may have a notch for receiving the module securing element 38. FIG. 4 further shows the indicating element 24 of the SCM 18. Moreover, in the embodiment shown in FIG. 4, a holder 58 is provided that is adapted to clamp a bus extending along plural assemblies 10 as shown in FIG. 3. It is to be noted that branches of the bus extend from the bus to the respective bus plug 30 as indicated by the bus cable 26 in FIG. 3. In the lower part of FIG. 4, both the electrical and mechanical connection between the SCM 18 and the splitter modules (not visible in FIG. 4) is shown. In the depicted embodiment, the electrical connection is achieved by suitable connectors having pins 60. Moreover, several elongate protrusions 22, that may be made of plastic and may be somewhat thicker than electrical connections pins 60, are provided to position, preferably to center, the splitter modules 16 relative to the SCM 18.

This is shown in more detail in FIG. 5. FIG. 5 shows an embodiment in which the splitter module 16 has a printed circuit board 62, on which one or more connectors 64 are provided that may be adapted to receive electrical connection pins 60 (see FIG. 4) provided on the SCM 18. Moreover, in the embodiment shown, the splitter module 16 has a bore or recess for accommodating the centering protrusion 22.

Further, in the embodiment shown, the portion of the splitter module 16, in which the connector 64 and the recess for accommodating the centering protrusion 22 is present, is formed as a handle. This is in the embodiment shown achieved by forming this portion with a taper extending towards the telecommunications module 12 (not shown in FIG. 5). When the splitter module 16 is to be removed from the telecommunications module, the SCM 18 has to be removed in a first step. In a second step, the handle having the taper can be gripped, and an appropriate force (in the orientation of FIG. 5 in a downward direction) can be applied to remove the splitter module 16 from the telecommunications module 12.

In the embodiment shown, the handle is formed asymmetric to provide space in an area adjacent the handle. This space can advantageously be used to allow some electric or electronic components of the SCM to be accommodated there. As seen in a front-rear-direction A, the telecommunications module 16 and the SCM 18 overlap in this area, i.e. they are partially arranged adjacent to each other. This may be advantageous to provide an assembly which is compact in the front-rear-direction A. It can further be taken from FIG. 5 that the SCM 18 may have one or more printed circuit boards 66. Electric or electronic components may be arranged on both sides of the printed circuit boards 66. It may be advantageous to arrange taller electric or electronic components at the side facing the splitter modules and to arrange flat electric or electronic components at the other side which may be the side facing the bottom wall 48 of the carrier 32 (see FIG. 3).

The present invention has now been described with reference to several individual embodiments. The foregoing detailed description has been given for clarity of understanding only. No unnecessary limitations are to be understood or taken from it. All references to right, left, front, rear, up and down as well as references to directions are exemplary only and do not limit the claimed invention. It will be apparent to those persons skilled in the art that many changes can be made in the embodiments described without departing from the scope of the invention. Thus, the scope of the present invention should not be limited to the details and structures described herein, but rather by the structures described by the language of the claims, and the equivalents of those structures.

## Claims

1. An assembly (10) in the field of telecommunications having:
at least one telecommunications module (12) having, at a front side (14) of the assembly, line, POTS and/or DSL contacts adapted to connect line, POTS and/or DSL wires, respectively, therewith,
at least one splitter module (16), and
at least one switch and/or control module (SCM)(18) which is removably attached to at least one telecommunications module (12) or at least one splitter module (16),
at least one SCM (18) being assigned to a single telecommunications (12) or splitter module (16) and/or
plural splitter modules (16) being assigned to a single telecommunications module (12).

2. The assembly in accordance with claim 1 wherein at least two of an interface between the SCM (18) and the telecommunications module (12), an interface between the plural splitter modules (16) and the telecommunications module (12) and an interface between the splitter modules (16) and the SCM (18) are at least partially identical with each other.

3. The assembly in accordance with claim 1 or 2 wherein the splitter module (16) has at least one switch.

4. The assembly in accordance with any of the preceding claims wherein a mechanical centering contour (22) is provided at at least one interface between the telecommunications module (12), the splitter modules (16) and the SCM (18).

5. The assembly in accordance with any of the preceding claims wherein the splitter modules (16) and the SCM (18) overlap in a front-rear-direction (A).

6. The assembly in accordance with any of the preceding claims wherein the SCM (18) has at least one indicating element (24).

7. The assembly in accordance with any of the preceding claims further having at least one bus (26) disconnectably connected with at least one SCM (18).

8. The assembly in accordance with claim 7 wherein the bus (26) has at least one bus plug (30).

9. The assembly in accordance with claim 7 or 8 wherein the bus (26) has at least one pulling element (28).

10. The assembly in accordance with any of the preceding claims wherein the assembly (10) is mountable to a carrier (32) via a mechanical connector (34).

11. The assembly in accordance with claims 9 and 10 wherein the mechanical connector (34) has a plug securing element (36) for securing the bus plug (30).

12. The assembly in accordance with claim 10 or 11 wherein the mechanical connector (34) has a module securing element (38) for securing the SCM (18).

13. The assembly in accordance with one of claims 10 to 12 wherein the mechanical connector (34) has at least one centering portion (40) separate from a mechanical connection portion (42).

14. A combination of the assembly in accordance with one of the preceding claims and an existing control system connected with at least one SCM (18).

15. A use of a switch and/or control module (18) in an assembly in the field of telecommunications, the assembly further having at least one telecommunications module (12) having line, POTS and/or DSL contacts adapted to connect line, POTS and/or DSL wires, respectively, therewith, and more than one splitter module (16), for independently switching more than one splitter module (16) so as to bypass more than one splitter and to connect line with POTS or DSL wire.
